# FASCICULE DE BREVET EUROPEEN

(11) **EP 3 890 568 B1**
(45) Date de publication et mention de la délivrance du brevet: **23.08.2023**
(21) Numéro de dépôt: 19813548.5
(22) Date de dépôt: 05.12.2019
(51) Int. Cl.: A47J 27/04

(54) **ACCESSOIRE CUISEUR VAPEUR AVEC DISPOSITIF DE SUPPORT REVETU EN SILICONE**
DÄMPFERZUBEHÖR MIT EINER SILIKONBESCHICHTETEN STÜTZVORRICHTUNG
STEAMER ACCESSORY WITH SILICONE-COATED SUPPORT DEVICE

(30) Priorité: 07.12.2018 FR 1872525; 13.03.2019 FR 1902580
(43) Date de publication de la demande: 13.10.2021
(73) Titulaire: SEB S.A., 69130 Ecully (FR)
(72) Inventeur: DELRUE, Olivier, 21260 SELONGEY (FR); ALLEMAND, Bernard, 70100 VELESMES ECHEVANNE (FR); FRADET, Gautier, 21120 ECHEVANNES (FR); SEURAT, Frédéric, 21490 BRETIGNY (FR)
(74) Mandataire: SEB Développement
(86) Numéro de dépôt international: PCT/EP2019/083889
(87) Numéro de publication internationale: WO 2020/115245

(56) Documents cités:
- FR-A1- 2 786 083
- FR-A1- 3 014 666
- FR-A1- 3 051 647
- FR-A5- 2 161 447

## Description

### Domaine technique

La présente invention concerne le domaine technique des appareils et dispositifs de production de vapeur pour chauffer et/ou cuire des aliments à la vapeur.

La présente invention concerne plus particulièrement les accessoires cuiseur vapeur pour chauffer et/ou cuire à la vapeur des aliments contenus dans un récipient.

La présente invention concerne également les appareils pour chauffer et/ou cuire à la vapeur des aliments, comportant un récipient associé à un dispositif de production de vapeur formant un tel accessoire cuiseur vapeur.

### Technique antérieure

Il est connu, du document FR 3 060 286 A1 déposé par la demanderesse, un accessoire cuiseur vapeur pour chauffer et/ou cuire à la vapeur des aliments contenus dans un récipient. L'accessoire cuiseur vapeur comprend un générateur de vapeur comportant une chambre de production de vapeur reliée à une sortie de distribution de vapeur ménagée dans une partie inférieure du générateur de vapeur. L'accessoire cuiseur vapeur comporte un dispositif de support portant le générateur de vapeur et prévu pour reposer sur le récipient. Le dispositif de support comporte une paroi d'appui portant le générateur de vapeur. La paroi d'appui comporte une face inférieure.

Cependant, un tel accessoire cuiseur vapeur présente l'inconvénient d'avoir une paroi d'appui ayant une face inférieure qui est directement exposée à un environnement à température élevée. La paroi d'appui du dispositif de support peut atteindre une température importante au cours de l'utilisation, ce qui entraine des situations dangereuses pour l'utilisateur. L'utilisateur risque de se brûler en touchant la paroi d'appui très chaude par inadvertance. Après l'utilisation, une paroi d'appui très chaude risque également de causer des dégâts sur un plan de travail non protégé. Par ailleurs, certaines recettes nécessitent une étape de cuisson, par exemple une cuisson au four, avant la cuisson à la vapeur. En l'occurrence, le récipient issu de cette étape de cuisson pourrait présenter une température très élevée, pouvant détériorer la paroi d'appui du dispositif de support qui vient reposer sur le récipient.

En outre, un tel accessoire cuiseur vapeur présente l'inconvénient d'entrainer une fuite de vapeur involontaire entre la paroi d'appui et un bord supérieur du récipient, lorsque la face inférieure de la paroi d'appui présente un mauvais état de surface ou lorsque la planéité du bord supérieur du récipient est mauvaise.

De plus, la face inférieure de la paroi d'appui est exposée à un environnement humide lié à la présence de vapeur. La paroi d'appui pourrait glisser sur le bord supérieur du récipient lorsque le récipient est placé sur un plan de travail incliné ou lorsque le bord supérieur du récipient est légèrement incliné.

Un appareil selon le préambule de la revendication 1 est connu du document FR2161447.

### Exposé de l'invention

Un objet de la présente invention est de proposer un accessoire cuiseur vapeur utilisé avec un récipient pour chauffer et/ou cuire des aliments à la vapeur, qui peut être utilisé en toute sécurité.

Un autre objet de la présente invention est de proposer un accessoire cuiseur vapeur utilisé avec un récipient pour chauffer et/ou cuire des aliments à la vapeur, qui permet de mieux contrôler l'échappement de vapeur.

Un autre objet de la présente invention est de proposer un accessoire cuiseur vapeur utilisé avec un récipient pour chauffer et/ou cuire des aliments à la vapeur, qui présente une construction simple et économique.

Un autre objet de la présente invention est de proposer un accessoire cuiseur vapeur utilisé avec un récipient pour chauffer et/ou cuire des aliments à la vapeur, qui présente une construction robuste et pérenne.

Un autre objet de la présente invention est de proposer un cuiseur vapeur électrique pour chauffer et/ou cuire des aliments à la vapeur comportant un récipient et un accessoire cuiseur vapeur qui peut être utilisé en toute sécurité.

Un autre objet de la présente invention est de proposer un cuiseur vapeur électrique pour chauffer et/ou cuire des aliments à la vapeur comportant un récipient et un accessoire cuiseur vapeur qui permet de mieux contrôler l'échappement de vapeur.

Un autre objet de la présente invention est de proposer un cuiseur vapeur électrique pour chauffer et/ou cuire des aliments à la vapeur comportant un récipient et un accessoire cuiseur vapeur qui présente une construction simple et économique.

Un autre objet de la présente invention est de proposer un cuiseur vapeur électrique pour chauffer et/ou cuire des aliments à la vapeur comportant un récipient et un accessoire cuiseur vapeur qui présente une construction robuste et pérenne.

### Résumé de l'invention

Ces objets sont atteints avec un accessoire cuiseur vapeur pour chauffer et/ou cuire à la vapeur des aliments contenus dans un récipient, l'accessoire cuiseur vapeur comprenant un générateur de vapeur comportant une chambre de production de vapeur reliée à une sortie de distribution de vapeur ménagée dans une partie inférieure du générateur de vapeur, l'accessoire cuiseur vapeur comportant un dispositif de support portant le générateur de vapeur et prévu pour reposer sur le récipient, le dispositif de support comportant une paroi d'appui portant le générateur de vapeur, la paroi d'appui comportant une face inférieure présentant une zone d'appui prévue pour reposer sur le récipient, au moins la zone d'appui de la face inférieure étant réalisée en silicone, du fait que la paroi d'appui est montée de façon amovible par rapport au générateur de vapeur, que la paroi d'appui comporte une structure de rigidification métallique, et que la structure de rigidification métallique s'étend sous le générateur de vapeur.

Par amovible, on comprend que la paroi d'appui peut être démontée sans faire appel à un outil. Cette disposition présente l'avantage de démonter facilement la paroi d'appui pour le nettoyage. Une telle caractéristique permet également de changer la paroi d'appui de manière à pouvoir mieux s'adapter à différents types de récipients.

Cette disposition permet notamment d'éviter un affaissement du dispositif de support qui serait dû à une exposition à des températures élevées rencontrées par exemple lors de la chauffe à sec d'un récipient de cuisson portant l'accessoire cuiseur vapeur.

L'accessoire cuiseur vapeur ainsi réalisé présente l'avantage d'avoir une paroi d'appui qui est à la fois solide grâce à une structure de rigidification métallique et résistante aux températures élevées grâce à un revêtement en silicone. Le revêtement en silicone permet également de remédier aux éventuels défauts de contact entre le bord supérieur du récipient et la face inférieure de la paroi d'appui. Ainsi, une telle construction assure l'étanchéité entre la face inférieure de la paroi d'appui et le bord supérieur du récipient. De surcroît, une telle construction permet de garantir une bonne adhérence entre la paroi d'appui et le récipient, ce qui diminue drastiquement le risque de glissement de l'accessoire cuiseur vapeur sur le récipient.

Avantageusement, la structure de rigidification métallique est une paroi métallique revêtue de silicone au moins sur la zone d'appui de la face inférieure. Cette disposition présente une construction facile à mettre en oeuvre.

Avantageusement, la structure de rigidification métallique comporte au moins une armature en fil métallique. Cette disposition permet d'avoir une construction à la fois légère et rigide.

Avantageusement, la structure de rigidification métallique est entièrement revêtue de silicone. Cette disposition présente une construction simple et économique à mettre en oeuvre.

Avantageusement, le dispositif de support comprend un écrou de fixation portant la paroi d'appui et mobile entre une position verrouillée dans laquelle la paroi d'appui est fixée sur le générateur de vapeur et une position déverrouillée dans laquelle la paroi d'appui peut être démontée de l'accessoire cuiseur vapeur. Cette disposition présente une construction économique et simple à mettre en oeuvre.

Avantageusement, le dispositif de support comporte une rondelle disposée entre l'écrou de fixation et la paroi d'appui. Cette disposition permet à la fois d'assurer une bonne étanchéité entre l'écrou de fixation et la paroi d'appui, et de renforcer l'assemblage de l'écrou de fixation sur le générateur de vapeur.

Avantageusement, l'écrou de fixation est connecté au générateur de vapeur par une liaison à baïonnette. Cette disposition présente l'avantage d'avoir une attache rapide et facile de la paroi d'appui sur la partie inférieure du générateur de vapeur. L'accouplement de type baïonnette est à la fois sûr et efficace.

Avantageusement, le dispositif de support comporte au moins un orifice d'échappement de vapeur configuré pour mettre en communication une enceinte de cuisson et l'extérieur de l'accessoire cuiseur vapeur, l'enceinte de cuisson étant délimitée par la paroi d'appui et le récipient. Cette disposition permet de mieux contrôler l'échappement de vapeur hors du récipient fermé par l'accessoire cuiseur vapeur.

Avantageusement, l'orifice d'échappement de vapeur traverse l'écrou de fixation. Cette disposition présente une construction simple à mettre en oeuvre.

Avantageusement, la paroi d'appui présente une cavité centrale sur la face inférieure dans laquelle est logé l'écrou de fixation. Cette disposition présente une construction compacte et économique.

Avantageusement, le générateur de vapeur comporte une paroi inférieure dans laquelle est formée la sortie de distribution de vapeur, et la paroi d'appui est agencée en dessous de la paroi inférieure et comporte un orifice de distribution de vapeur traversé par la sortie de distribution de vapeur.

Avantageusement, la paroi d'appui est de forme circulaire. Cette disposition permet à la paroi d'appui de mieux s'adapter à des récipients dont le bord supérieur est rond.

Avantageusement, la paroi d'appui est de forme rectangulaire. Cette disposition permet à la paroi d'appui de mieux s'adapter à des récipients dont le bord supérieur est rectangulaire.

Ces objets sont également atteints avec un cuiseur vapeur électrique, comportant un récipient pour contenir les aliments à chauffer et/ou à cuire, et un accessoire cuiseur vapeur prévu pour reposer sur le récipient et pour chauffer et/ou cuire à la vapeur les aliments contenus dans le récipient selon l'une au moins des caractéristiques précitées.

### Brève description des dessins

On comprendra mieux les buts, aspects et avantages de la présente invention, d'après la description donnée ci-après des modes particuliers de réalisation de l'invention présenté à titre d'exemple non limitatif, en se référant aux dessins annexés dans lesquels :
La figure 1 illustre une vue en perspective éclatée d'un cuiseur vapeur électrique comportant un accessoire cuiseur vapeur et un récipient selon un premier mode particulier de réalisation de l'invention ;
La figure 2 illustre une vue en coupe de l'accessoire cuiseur vapeur illustré sur la figure 1, selon une ligne de coupe II-II ;
La figure 3 illustre une vue en coupe de l'accessoire cuiseur vapeur illustré sur la figure 1, selon une ligne de coupe III-III passant par un évent ;
La figure 4 illustre une vue de dessous de l'accessoire cuiseur vapeur illustré sur la figure 1 ;
La figure 5 illustre une vue en perspective d'une paroi d'appui de l'accessoire cuiseur vapeur illustré sur la figure 1 ;
La figure 6 illustre une autre vue en perspective de la paroi d'appui illustrée sur la figure 5 ;
La figure 7 illustre une vue en perspective de la paroi d'appui selon un deuxième mode particulier de réalisation de l'invention ;
La figure 8 illustre une vue de dessus de la paroi d'appui illustrée sur la figure 7 en perspective éclatée ;

### Description des modes de réalisation

Seuls les éléments nécessaires à la compréhension de l'invention ont été représentés. Pour faciliter la lecture des dessins, les mêmes éléments portent les mêmes références d'une figure à l'autre.

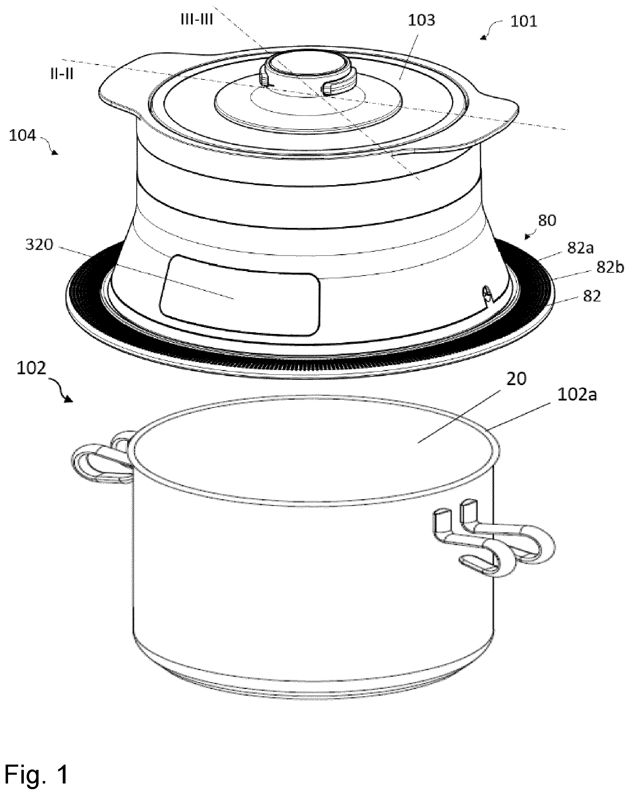

Le cuiseur vapeur électrique 101 illustré de manière schématique sur la figure 1 est un appareil pour chauffer et/ou cuire à la vapeur des aliments, comportant un récipient 102 pour contenir les aliments à chauffer et/ou à cuire, et un accessoire cuiseur vapeur 104 prévu pour reposer sur le récipient 102.

Plus particulièrement dans l'exemple de réalisation illustré sur les figures 1 à 3, l'accessoire cuiseur vapeur 104 est configuré pour chauffer et/ou cuire à la vapeur des aliments contenus dans le récipient 102. L'accessoire cuiseur vapeur 104 comporte un dispositif de support 80 prévu pour reposer sur le récipient 102.

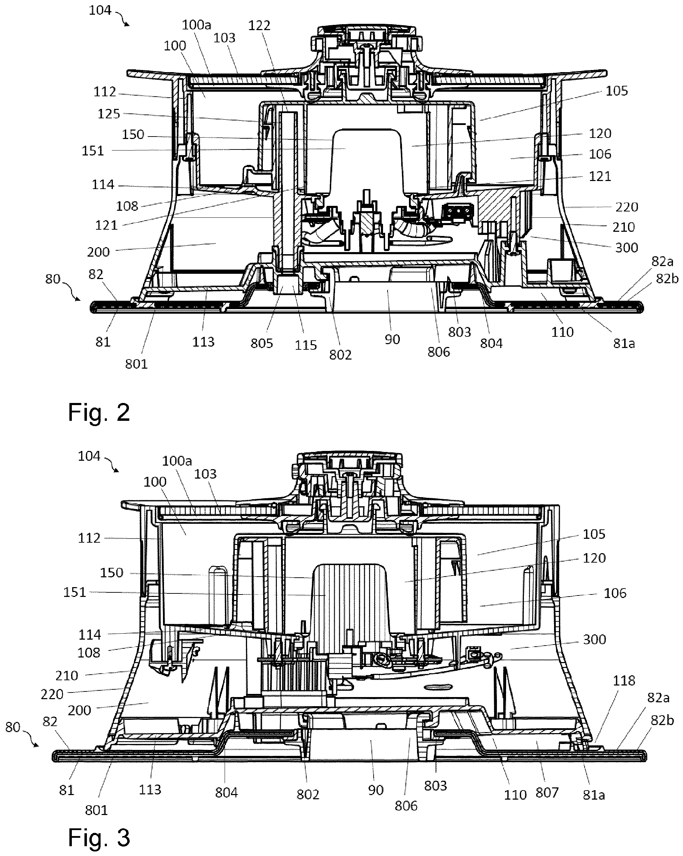

L'accessoire cuiseur vapeur 104 comprend une enceinte 100 présentant une paroi latérale extérieure 112 et une paroi de fond 114. L'enceinte 100 comporte un réservoir d'eau 106 délimité par la paroi latérale extérieure 112 et la paroi de fond 114. Le réservoir d'eau 106 communique avec l'extérieur par une ouverture supérieure 100a de l'enceinte 100. Tel que représenté sur la figure 2, l'accessoire cuiseur vapeur 104 comporte un couvercle 103 amovible qui ferme l'enceinte 100 au niveau de son ouverture supérieure 100a. Le couvercle 103 est mobile entre une position ouverte de l'enceinte 100 où le réservoir d'eau 106 est accessible depuis l'extérieur pour le remplissage d'eau et une position fermée de l'enceinte 100.

L'accessoire cuiseur vapeur 104 comporte un générateur de vapeur 105 alimentant en vapeur l'enceinte 100. Le dispositif de support 80 est prévu pour porter le générateur de vapeur 105. Le générateur de vapeur 105 présente une chambre de production de vapeur 120. Le réservoir d'eau 106 alimente en eau la chambre de production de vapeur 120 par gravité. A cet effet le réservoir d'eau 106 communique par une entrée d'alimentation d'eau 121 avec la chambre de production de vapeur 120. Dans l'exemple de réalisation illustré sur la figure 2, le réservoir d'eau 106 communique avec la chambre de production de vapeur 120 par deux entrées d'alimentation d'eau 121.

De préférence, le réservoir d'eau 106 présente un fond 108 déversant vers les deux entrées d'alimentation d'eau 121. Le fond 108 est formé par la paroi de fond 114 de l'enceinte 100.

La chambre de production de vapeur 120 comporte un dispositif de chauffe 150 pour transformer en vapeur l'eau présente dans la chambre de production de vapeur 120. Dans l'exemple de réalisation illustré sur les figures 2 à 3, le dispositif de chauffe 150 comprend un plot chauffant 151. Selon un autre mode particulier de réalisation de l'invention, le dispositif de chauffe 150 peut notamment comporter un élément chauffant disposé sous une plaque de diffusion de chaleur et/ou dans une plaque de diffusion de chaleur formant au moins une partie du fond de la chambre de production de vapeur 120.

La chambre de production de vapeur 120 est reliée à une sortie de distribution de vapeur 115 ménagée dans une partie inférieure 110 du générateur de vapeur 105. A cet effet, la chambre de production de vapeur 120 communique avec une sortie d'évacuation de vapeur 122 disposée plus haut que l'entrée d'alimentation d'eau 121. La sortie d'évacuation de vapeur 122 communique par un conduit 125 avec la sortie de distribution de vapeur 115.

Avantageusement, le conduit 125 est vertical. A titre de variante le conduit 125 peut être descendant sans nécessairement être vertical. De préférence le conduit 125 est dépourvu de chicanes. En d'autres termes, le conduit 125 est descendant de manière continue, sans nécessairement être rectiligne.

Le générateur de vapeur 105 présente une paroi inférieure 113 dans laquelle est formée la sortie de distribution de vapeur 115. La chambre de production de vapeur 120 est agencée dans le générateur de vapeur 105 à distance de la paroi inférieure 113.

L'accessoire cuiseur vapeur 104 comprend un compartiment technique 200 agencé en dessous de l'enceinte 100 et situé entre la paroi de fond 114 de l'enceinte 100 et la paroi inférieure 113. Tel que visible aux figures 1 à 3, le compartiment technique 200 présente une paroi annulaire extérieure 210 s'étendant depuis une partie de col cylindrique relativement étroite vers une extrémité inférieure relativement large. L'accessoire cuiseur vapeur 104 comporte un dispositif de commande et d'affichage 300 disposé dans le compartiment technique 200. Le dispositif de commande et d'affichage 300 comporte un boîtier électronique de commande (non représenté sur les figures) présentant un écran de commande et d'affichage 320 qui est visible sur une face extérieure 220 de la paroi annulaire extérieure 210. Plus particulièrement, le dispositif de commande et d'affichage 300 est disposé à l'intérieur du compartiment technique 200 de manière hermétique et étanche, ce qui permet à la fois de garantir l'étanchéité des composants électroniques à l'intérieur du dispositif de commande et d'affichage 300 et d'éviter la condensation d'eau sur l'écran de commande et d'affichage 320.

De préférence, la paroi inférieure 113 est assemblée avec la paroi annulaire extérieure 210 et la paroi de fond 114, par exemple par vissage, par soudage, par clipsage ou par surmoulage.

Tel que visible aux figures 2 à 6, le dispositif de support 80 comporte une paroi d'appui 801 disposée en dessous de la paroi inférieure 113 et portant le générateur de vapeur 105. La paroi d'appui 801 comporte une face inférieure 81 prévue pour reposer sur le récipient 102. La face inférieure 81 présente une zone d'appui 81a configurée pour venir en appui sur un bord supérieur 102a du récipient 102. Tel que schématiquement représenté sur les figures 2 à 5, la zone d'appui 81a est plane et annulaire. Avantageusement, la paroi d'appui 801 est réalisée par une paroi métallique revêtue de silicone au moins sur la zone d'appui 81a de la face inférieure 81. Dans l'exemple de réalisation illustré sur les figures 1 à 6, la paroi d'appui 801 est entièrement revêtue en silicone. La paroi d'appui 801 comporte ainsi une structure de rigidification métallique. Tel que bien visible sur les figures 2 et 3, la structure de rigidification métallique s'étend sous le générateur de vapeur 105.

Avantageusement, la paroi d'appui 801 est de forme circulaire. A titre de variante, la paroi d'appui 801 peut être de forme, par exemple, rectangulaire, carrée, hexagonale, ovale, etc. pour mieux s'adapter à des récipients de formes différentes.

La paroi d'appui 801 comporte une face supérieure 82 à l'opposé de la face inférieure 81. La face supérieure 82 présente une zone annulaire 82a entourant le générateur de vapeur 105. La zone annulaire 82a est plane. De préférence, la zone annulaire 82a est pourvue d'une pluralité de protubérances 82b faisant saillie depuis la face supérieure 82, permettant à l'utilisateur de saisir fermement la paroi d'appui 801.

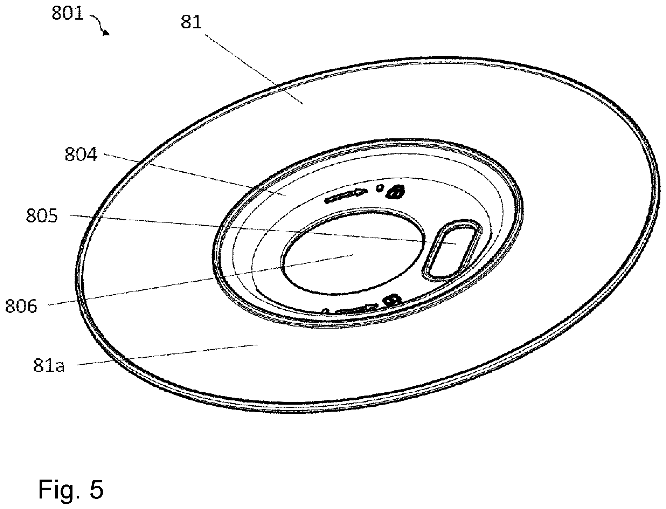

Conformément aux figures 2 à 3, la paroi d'appui 801 comporte un orifice de distribution de vapeur 805 traversé par la sortie de distribution de vapeur 115. La sortie de distribution de vapeur 115 est formée dans la paroi inférieure 113. La paroi inférieure 113 est reliée à la sortie d'évacuation de vapeur 122 par le conduit 125 s'étendant de part et d'autre de la paroi de fond 114 de l'enceinte 100. A titre de variante la sortie de distribution de vapeur 115 est issue du conduit 125 traversant la paroi inférieure 113 et la paroi d'appui 801. Dans l'exemple de réalisation illustré sur les figures 5 à 6, l'orifice de distribution de vapeur 805 présente une forme oblongue.

Plus particulièrement, la paroi d'appui 801 est montée amovible par rapport au générateur de vapeur 105. Le dispositif de support 80 comprend un écrou de fixation 802 portant la paroi d'appui 801 et mobile entre une position verrouillée dans laquelle la paroi d'appui 801 est fixée sur la paroi inférieure 113 du générateur de vapeur 105 et une position déverrouillée dans laquelle la paroi d'appui 801 peut être démontée de la paroi inférieure 113.

L'écrou de fixation 802 est configuré pour traverser une ouverture centrale 806 de la paroi d'appui 801 et venir coopérer avec la paroi inférieure 113 pour réaliser le verrouillage et le déverrouillage de la paroi d'appui 801. Dans l'exemple de réalisation illustré sur les figures 2 à 3, l'écrou de fixation 802 est maintenu sur la paroi inférieure 113 par une liaison à baïonnette. De manière avantageuse, le dispositif de support 80 comporte une rondelle 803 disposée entre l'écrou de fixation 802 et la paroi d'appui 801.

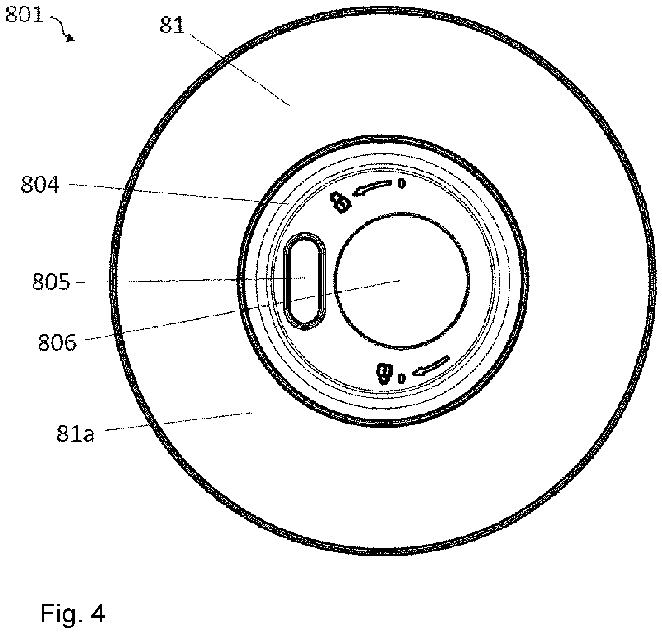

Tel que bien visible sur les figures 4 à 6 la structure de rigidification métallique s'étend autour de l'ouverture centrale 806 et de l'orifice de distribution de vapeur 805.

Selon un autre mode particulier de réalisation de l'invention, la paroi d'appui 801 peut être fixée sur la paroi inférieure 113 par un système à aimant qui est dimensionné pour être fonctionnel dans un milieu à haute température.

Lorsque l'accessoire cuiseur vapeur 104 est disposé sur le récipient 102, une enceinte de cuisson 20 est délimitée par la paroi d'appui 801 et le récipient 102. Le dispositif de support 80 comporte au moins un orifice d'échappement de vapeur 90 configuré pour mettre en communication l'enceinte de cuisson 20 et l'extérieur de l'accessoire cuiseur vapeur 104. Plus particulièrement, l'orifice d'échappement de vapeur 90 est formé par l'écrou de fixation 802 traversant l'ouverture centrale 806. En se référant aux figures 4 à 5, la paroi d'appui 801 présente une cavité centrale 804 dans laquelle sont formés l'ouverture centrale 806 et l'orifice de distribution de vapeur 805, et dans laquelle est logé l'écrou de fixation 802 lorsque la paroi d'appui 801 est verrouillée sur la paroi inférieure 113.

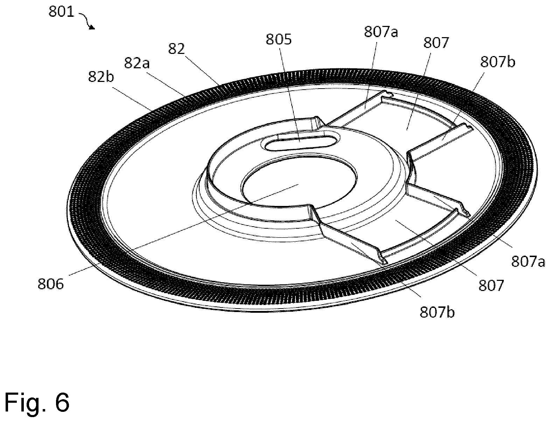

Tel que représenté à la figure 3, l'accessoire cuiseur vapeur 104 présente au moins un évent 118 formé entre la paroi d'appui 801 et le générateur de vapeur 105 et prévu pour mettre en communication l'orifice d'échappement de vapeur 90 et l'extérieur de l'accessoire cuiseur vapeur 104. L'orifice d'échappement de vapeur 90 est relié à l'évent 118 par un circuit d'échappement 807, mieux visible sur la figure 6. Le circuit d'échappement 807 est délimité par la paroi inférieure 113 et deux parois latérales 807a, 807b, les deux paroi latérales 807a, 807b étant disposées en parallèle et espacées l'une de l'autre sur la face supérieure 82 de la paroi d'appui 801. Selon l'exemple de réalisation illustré sur la figure 6, le dispositif de support 80 ménage deux circuits d'échappement 807 reliant respectivement deux évents 118 à l'orifice d'échappement de vapeur 90. Les deux circuits d'échappements 807 sont disposés perpendiculaires l'un par rapport à l'autre. A titre de variante, le dispositif de support 80 peut comporter plusieurs orifices d'échappement de vapeur 90.

Le cuiseur vapeur électrique 101 illustré sur la figure 1 et l'accessoire cuiseur vapeur 104 illustré sur les figures 1 à 6 fonctionnent et s'utilisent de la manière suivante.

L'utilisateur dispose l'accessoire cuiseur vapeur 104 sur le récipient 102 après avoir disposé les aliments dans le récipient 102. Le dispositif de support 80 portant le générateur de vapeur 105 repose sur le bord supérieur 102a du récipient 102 pour former l'enceinte de cuisson 20. L'utilisateur enlève le couvercle 103 et remplit le réservoir d'eau 106 par l'ouverture supérieure 100a de l'enceinte 100. L'eau s'écoule par les deux entrées d'alimentation d'eau 121 dans la chambre de production de vapeur 120. De préférence, l'utilisateur remplit le réservoir d'eau 106 jusqu'à un niveau suffisamment inférieur à la sortie d'évacuation de vapeur 122, pour éviter que l'eau atteigne la sortie d'évacuation de vapeur 122 et s'écoule par le conduit 125. L'utilisateur met alors en marche le dispositif de chauffe 150 en appuyant sur l'écran de commande et d'affichage 320. La température de l'eau présente dans la chambre de production de vapeur 120 s'élève jusqu'à ce que de la vapeur soit produite. La vapeur produite dans la chambre de production de vapeur 120 s'échappe par la sortie d'évacuation de vapeur 122 pour atteindre la sortie de distribution de vapeur 115 en descendant par le conduit 125. La vapeur sortant de la sortie de distribution de vapeur 115 se répand dans l'enceinte de cuisson 20 du récipient 102 pour chauffer et/ou cuire les aliments.

Lorsque les aliments présents dans le récipient 102 sont saturés en vapeur, la vapeur s'échappe d'abord par l'orifice d'échappement de vapeur 90 ménagé dans l'écrou de fixation 802, puis par les deux circuits d'échappement 807 et enfin par les deux évents 118 avant d'atteindre l'extérieur de l'accessoire cuiseur vapeur 104.

L'accessoire cuiseur vapeur 104 ainsi réalisé présente l'avantage d'avoir une paroi d'appui 801 qui est à la fois solide grâce à une structure de rigidification métallique et résistante aux températures élevées grâce à un revêtement en silicone. Le revêtement en silicone permet également de remédier aux éventuels défauts de contact entre le bord supérieur 102a du récipient 102 et la face inférieure 81 de la paroi d'appui 801. Ainsi, une telle construction assure l'étanchéité entre la face inférieure 81 de la paroi d'appui 801 et le bord supérieur 102a du récipient 102. De surcroît, une telle construction permet de garantir une bonne adhérence entre la paroi d'appui 801 et le récipient 102, ce qui diminue drastiquement le risque de glissement de l'accessoire cuiseur vapeur sur le récipient.

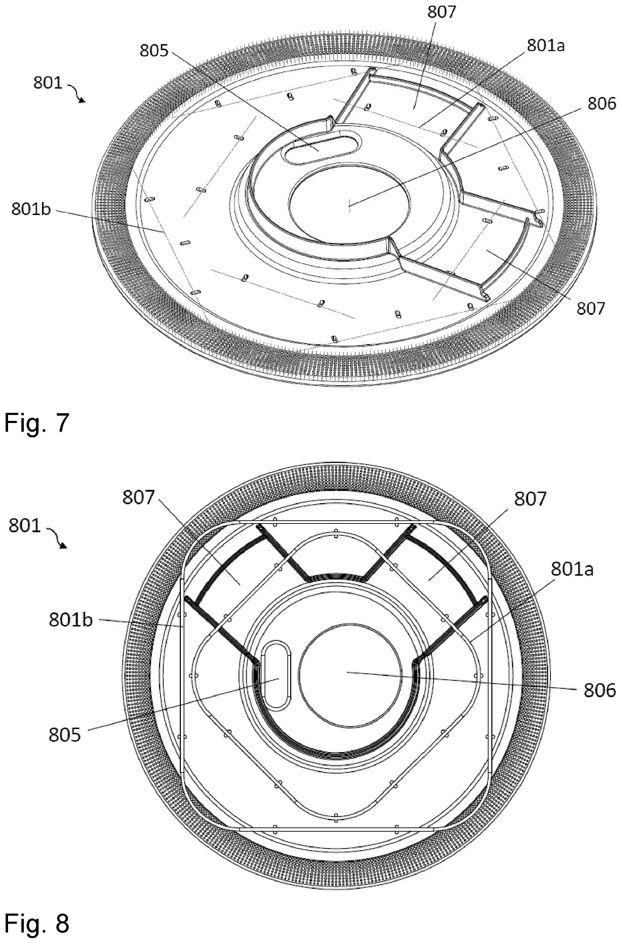

Selon une variante de réalisation de l'invention illustrée aux figures 7 et 8, la paroi d'appui 801 comporte une structure de rigidification métallique revêtue en silicone. La structure de rigidification métallique est composée d'une première armature en fil d'acier 801a et d'une deuxième armature en fil d'acier 801b. Les première et deuxième armatures en fil d'acier 801a, 801b sont concentriques et présentent chacune un cadre de forme sensiblement carrée. La première armature en fil d'acier 801a est disposée à l'intérieur de la deuxième armature en fil d'acier 801b, avec un décalage angulaire de 45 degrés. La deuxième armature en fil d'acier 801b est disposée de manière à ce que les deux circuits d'échappement 807 s'étendent chacun le long d'une diagonale de la deuxième armature en fil d'acier 801b. Une telle configuration présente l'avantage d'avoir une construction à la fois légère et rigide. Tel que bien visible sur les figures 7 et 8 la structure de rigidification métallique s'étend autour de l'ouverture centrale 806 et de l'orifice de distribution de vapeur 805. Ainsi la structure de rigidification métallique s'étend sous le générateur de vapeur 105.

A titre de variante, la structure de rigidification métallique comporte une pluralité d'armatures métalliques. Chaque armature métallique peut présenter tout type de forme et de taille.

A titre de variante, la structure de rigidification métallique peut comporter au moins une armature métallique configurée pour porter le générateur de vapeur 105 lorsque le dispositif de support 80 repose sur le récipient 102.

Bien entendu, l'invention n'est nullement limitée aux modes de réalisations précédemment décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention tel que défini par les revendications.

## Revendications

1. Accessoire cuiseur vapeur (104) pour chauffer et/ou cuire à la vapeur des aliments contenus dans un récipient (102), l'accessoire cuiseur vapeur (104) comprenant un générateur de vapeur (105) comportant une chambre de production de vapeur (120) reliée à une sortie de distribution de vapeur (115) ménagée dans une partie inférieure (110) du générateur de vapeur (105), l'accessoire cuiseur vapeur (104) comportant un dispositif de support (80) portant le générateur de vapeur (105) et prévu pour reposer sur le récipient (102), le dispositif de support (80) comportant une paroi d'appui (801) portant le générateur de vapeur (105), la paroi d'appui (801) comportant une face inférieure (81) présentant une zone d'appui (81a) prévue pour reposer sur le récipient (102), au moins la zone d'appui (81a) de la face inférieure (81) étant réalisée en silicone, **caractérisé en ce que** la paroi d'appui (801) est montée de façon amovible par rapport au générateur de vapeur (105), **en ce que** la paroi d'appui (801) comporte une structure de rigidification métallique, et **en ce que** la structure de rigidification métallique s'étend sous le générateur de vapeur (105).

2. Accessoire cuiseur vapeur (104) selon la revendication 1, **caractérisé en ce que** la structure de rigidification métallique est une paroi métallique revêtue de silicone au moins sur la zone d'appui (81a) de la face inférieure (81).

3. Accessoire cuiseur vapeur (104) selon la revendication 1, **caractérisé en ce que** la structure de rigidification métallique comporte au moins une armature en fil métallique.

4. Accessoire cuiseur vapeur (104) selon l'une des revendications 1 à 3, **caractérisé en ce que** la structure de rigidification métallique est entièrement revêtue de silicone.

5. Accessoire cuiseur vapeur (104) selon l'une des revendications 1 à 4, **caractérisé en ce que** le dispositif de support (80) comprend un écrou de fixation (802) portant la paroi d'appui (801) et mobile entre une position verrouillée dans laquelle la paroi d'appui (801) est fixée sur le générateur de vapeur (105) et une position déverrouillée dans laquelle la paroi d'appui (801) peut être démontée de l'accessoire cuiseur vapeur (104).

6. Accessoire cuiseur vapeur (104) selon la revendication 5, **caractérisé en ce que** le dispositif de support (80) comporte une rondelle (803) disposée entre l'écrou de fixation (802) et la paroi d'appui (801).

7. Accessoire cuiseur vapeur (104) selon l'une des revendications 5 à 6, **caractérisé en ce que** l'écrou de fixation (802) est connecté au générateur de vapeur (105) par une liaison à baïonnette.

8. Accessoire cuiseur vapeur (104) selon l'une des revendications 1 à 7, **caractérisé en ce que** le dispositif de support (80) comporte au moins un orifice d'échappement de vapeur (90) configuré pour mettre en communication une enceinte de cuisson (20) et l'extérieur de l'accessoire cuiseur vapeur (104), l'enceinte de cuisson (20) étant délimitée par la paroi d'appui (801) et le récipient (102).

9. Accessoire cuiseur vapeur (104) selon les revendications 5 et 8, **caractérisé en ce que** l'orifice d'échappement de vapeur (90) traverse l'écrou de fixation (802).

10. Accessoire cuiseur vapeur (104) selon l'une des revendications 5 à 9, **caractérisé en ce que** la paroi d'appui (801) présente une cavité centrale (804) sur la face inférieure (81) dans laquelle est logé l'écrou de fixation (802).

11. Accessoire cuiseur vapeur (104) selon l'une des revendications 1 à 10, **caractérisé en ce que** le générateur de vapeur (105) comporte une paroi inférieure (113) dans laquelle est formée la sortie de distribution de vapeur (115), et **en ce que** la paroi d'appui (801) est agencée en dessous de la paroi inférieure (113) et comporte un orifice de distribution de vapeur (805) traversé par la sortie de distribution de vapeur (115).

12. Accessoire cuiseur vapeur (104) selon l'une des revendications 1 à 11, **caractérisé en ce que** la paroi d'appui (801) est de forme circulaire.

13. Accessoire cuiseur vapeur (104) selon l'une des revendications 1 à 11, **caractérisé en ce que** la paroi d'appui (801) est de forme rectangulaire.

14. Cuiseur vapeur électrique (101) comportant un récipient (102) pour contenir les aliments à chauffer et/ou à cuire et un accessoire cuiseur vapeur (104) prévu pour reposer sur le récipient (102) et pour chauffer et/ou cuire à la vapeur les aliments contenus dans le récipient (102), **caractérisé en ce que** l'accessoire cuiseur vapeur (104) est conforme à l'une des revendications 1 à 13.

## Patentansprüche

1. Dampfkocherzubehör (104) zum Erhitzen und/oder Dampfen von Lebensmitteln, die in einem Behälter (102) enthalten sind, wobei das Dampfkocherzubehör (104) einen Dampfgenerator (105) umfasst, der eine Dampfproduktionskammer (120) umfasst, die mit einem Dampfverteilungsausgang (115) verbunden ist, der in einem unteren Teil (110) des Dampfgenerators (105) eingerichtet ist, wobei das Dampfkocherzubehör (104) eine Stützvorrichtung (80) umfasst, die den Dampfgenerator (105) trägt und dazu vorgesehen ist, auf dem Behälter (102) aufzuliegen, wobei die Stützvorrichtung (80) eine Auflagewand (801) umfasst, die den Dampfgenerator (105) trägt, wobei die Auflagewand (801) eine untere Seite (81) umfasst, die einen Auflagebereich (81a) aufweist, der dazu vorgesehen ist, auf dem Behälter (102) aufzuliegen, wobei mindestens der Auflagebereich (81a) der unteren Seite (81) aus Silikon hergestellt ist, **dadurch gekennzeichnet, dass** die Auflagewand (801) in Bezug auf den Dampfgenerator (105) auf abnehmbare Weise angebracht ist, dadurch, dass die Auflagewand (801) eine metallische Versteifungsstruktur umfasst, und dadurch, dass die metallische Versteifungsstruktur sich unter dem Dampfgenerator (105) erstreckt.

2. Dampfkocherzubehör (104) nach Anspruch 1, **dadurch gekennzeichnet, dass** die metallische Versteifungsstruktur eine metallische Wand ist, die mindestens auf dem Auflagebereich (81a) der unteren Seite (81) mit Silikon beschichtet ist.

3. Dampfkocherzubehör (104) nach Anspruch1, **dadurch gekennzeichnet, dass** die metallische Versteifungsstruktur mindestens ein Gestell aus Metalldraht umfasst.

4. Dampfkocherzubehör (104) nach einem der Ansprüche 1 bis 3, **dadurch gekennzeichnet, dass** die metallische Versteifungsstruktur vollständig mit Silikon beschichtet ist.

5. Dampfkocherzubehör (104) nach einem der Ansprüche 1 bis 4, **dadurch gekennzeichnet, dass** die Stützvorrichtung (80) eine Befestigungsmutter (802) umfasst, die die Auflagewand (801) trägt und beweglich ist zwischen einer verriegelten Position, in der die Auflagewand (801) am Dampfgenerator (105) befestigt ist, und einer entriegelten Position, in der die Auflagewand (801) vom Dampfkocherzubehör (104) demontiert werden kann.

6. Dampfkocherzubehör (104) nach Anspruch 5, **dadurch gekennzeichnet, dass** die Stützfvorrichtung (80) eine Unterlegscheibe (803) umfasst, die zwischen der Befestigungsmutter (802) und der Auflagewand (801) angeordnet ist.

7. Dampfkocherzubehör (104) nach einem der Ansprüche 5 bis 6, **dadurch gekennzeichnet, dass** die Befestigungsmutter (802) über eine Bajonettverbindung mit dem Dampfgenerator (105) verbunden ist.

8. Dampfkocherzubehör (104) nach einem der Ansprüche 1 bis 7, **dadurch gekennzeichnet, dass** die Stützvorrichtung (80) mindestens eine Dampfaustrittsöffnung (90) umfasst, die dazu ausgelegt ist, eine Kochkammer (20) und die Außenseite des Dampfkocherzubehörs (104) in Verbindung zu setzen, wobei die Kochkammer (20) durch die Auflagewand (801) und den Behälter (102) begrenzt wird.

9. Dampfkocherzubehör (104) nach den Ansprüchen 5 und 8, **dadurch gekennzeichnet, dass** die Dampfaustrittsöffnung (90) die Befestigungsmutter (802) durchquert.

10. Dampfkocherzubehör (104) nach einem der Ansprüche 5 bis 9, **dadurch gekennzeichnet, dass** die Auflagewand (801) auf der unteren Seite (81) einen mittleren Hohlraum (804) aufweist, in dem die Befestigungsmutter (802) aufgenommen ist.

11. Dampfkocherzubehör (104) nach einem der Ansprüche 1 bis 10, **dadurch gekennzeichnet, dass** der Dampfgenerator (105) eine untere Wand (113) umfasst, in der der Dampfaustrittsausgang (115) gebildet ist, und dadurch, dass die Auflagewand (801) unterhalb der unteren Wand (113) eingerichtet ist und eine Dampfverteilungsöffnung (805) umfasst, die vom Dampfverteilungsausgang (115) durchquert wird.

12. Dampfkocherzubehör (104) nach einem der Ansprüche 1 bis 11, **dadurch gekennzeichnet, dass** die Auflagewand (801) eine kreisförmige Form besitzt.

13. Dampfkocherzubehör (104) nach einem der Ansprüche 1 bis 11, **dadurch gekennzeichnet, dass** die Auflagewand (801) eine rechteckige Form besitzt.

14. Elektrischer Dampfkocher (101), umfassend einen Behälter (102) zum Enthalten der zu erhitzenden und/oder zu kochenden Lebensmittel und ein Dampfkocherzubehör (104), das dazu vorgesehen ist, auf dem Behälter (102) aufzuliegen und die im Behälter (102) enthaltenen Lebensmittel zu erhitzen und/oder zu dampfen, **dadurch gekennzeichnet, dass** das Dampfkocherzubehör (104) mit einem der Ansprüche 1 bis 13 konform ist.

## Claims

1. Steamer accessory (104) for heating and/or steaming food contained in a container (102), the steamer accessory (104) comprising a steam generator (105) comprising a steam-generating chamber (120) connected to a steam-distribution outlet (115) provided in a lower part (110) of the steam generator (105), the steamer accessory (104) comprising a support device (80) carrying the steam generator (105) and intended to rest on the container (102), the support device (80) comprising a bearing wall (801) carrying the steam generator (105), the bearing wall (801) comprising a lower face (81) having a bearing zone (81a) intended to rest on the container (102), at least the bearing zone (81a) of the lower face (81) being made from silicone, **characterised in that** the bearing wall (801) is removably mounted with respect to the steam generator (105), **in that** the bearing wall (801) comprises a metal stiffening structure, and **in that** the metal stiffening structure extends under the steam generator (105).

2. Steamer accessory (104) according to claim 1, **characterised in that** the metal stiffening structure is a silicone-coated metal wall at least on the bearing zone (81a) of the lower face (81).

3. Steamer accessory (104) according to claim 1, **characterised in that** the metal stiffening structure comprises at least one metal wire frame.

4. Steamer accessory (104) according to one of claims 1 to 3, **characterised in that** the metal stiffening structure is fully silicone-coated.

5. Steamer accessory (104) according to one of claims 1 to 4, **characterised in that** the support device (80) comprises a fixing nut (802) carrying the bearing wall (801) and movable between a locked position wherein the bearing wall (801) is fixed to the steam generator (105) and an unlocked position wherein the bearing wall (801) can be dismounted from the steamer accessory (104).

6. Steamer accessory (104) according to claim 5, **characterised in that** the support device (80) comprises a washer (803) disposed between the fixing nut (802) and the bearing wall (801).

7. Steamer accessory (104) according to one of claims 5 to 6, **characterised in that** the fixing nut (802) is connected to the steam generator (105) by a bayonet connection.

8. Steamer accessory (104) according to one of claims 1 to 7, **characterised in that** the support device (80) comprises at least one steam emission orifice (90) configured to put a cooking chamber (20) and the outside of the steamer accessory (104) in communication, the cooking chamber (20) being delimited by the bearing wall (801) and the container (102).

9. Steamer accessory (104) according to claims 5 and 8, **characterised in that** the steam emission orifice (90) passes through the fixing nut (802).

10. Steamer accessory (104) according to one of claims 5 to 9, **characterised in that** the bearing wall (801) has a central cavity (804) on the lower face (81), wherein the fixing nut (802) is housed.

11. Steamer accessory (104) according to one of claims 1 to 10, **characterised in that** the steam generator (105) comprises a lower wall (113), wherein the steam distribution outlet (115) is formed, and **in that** the bearing wall (801) is arranged below the lower wall (113) and comprises a steam distribution orifice (805) passed through by the steam distribution outlet (115).

12. Steamer accessory (104) according to one of claims 1 to 11, **characterised in that** the bearing wall (801) is circular-shaped.

13. Steamer accessory (104) according to one of claims 1 to 11, **characterised in that** the bearing wall (801) is rectangular-shaped.

14. Electrical steamer (101) comprising a container (102) for containing food to be heated and/or cooked and a steamer accessory (104) intended to rest on the container (102) and for heating and/or steaming food contained in the container (102), **characterised in that** the steamer accessory (104) is in accordance with one of claims 1 to 13.
